# EUROPÄISCHE PATENTSCHRIFT

(11) **EP 1 235 993 B1**
(45) Veröffentlichungstag und Bekanntmachung des Hinweises auf die Patenterteilung: **09.02.2005**
(21) Anmeldenummer: 00982751.0
(22) Anmeldetag: 07.12.2000
(51) Int. Cl.: F16D 43/10

(54) **KRAFTÜBERTRAGUNGSEINHEIT MIT DREHZAHLABHÄNGIGER HYDRAULISCHER KUPPLUNG UND FLIEHKRAFTAUSGLEICH**
FORCE-TRANSMISSION UNIT COMPRISING SPEED-DEPENDENT HYDRAULIC CLUTCH AND CENTRIFUGAL FORCE COMPENSATION
UNITE DE TRANSMISSION A ACCOUPLEMENT HYDRAULIQUE FONCTION DU REGIME ET A COMPENSATION DE FORCE CENTRIFUGE

(30) Priorität: 07.12.1999 AT 85299 U
(43) Veröffentlichungstag der Anmeldung: 04.09.2002
(73) Patentinhaber: Magna Drivetrain AG & Co KG, 8502 Lannach (AT)
(72) Erfinder: GRATZER, Franz, A-8152 Stallhofen (AT)
(74) Vertreter: Kovac, Werner
(86) Internationale Anmeldenummer: PCT/AT2000/000331
(87) Internationale Veröffentlichungsnummer: WO 2001/042675

(56) Entgegenhaltungen:
- EP-A- 0 443 149
- FR-A- 2 760 058
- US-A- 4 733 635
- US-A- 5 310 388

## Beschreibung

Die Erfindung handelt von einer Kraftübertragungseinheit mit einem Eingangsglied und einem Ausgangsglied und einer drehzahldifferenzabhängigen hydraulischen Kupplung, bei der eine hydrostatische Verdrängungsmaschine bei Auftreten einer Differenzdrehzahl zwischen Eingangsglied und Ausgangsglied in einem Druckraum einen Druck erzeugt, der auf einen eine Reibungskupplung beaufschlagenden Kolben wirkt, wobei die Reibungskupplung erste mit dem Eingangsglied und zweite mit dem Ausgangsglied antriebsverbundene Scheiben und eines der Glieder ein die Verdrängungsmaschine enthaltendes Gehäuse bildet.

Derartige Kraftübertragungseinheiten finden vor allem in Antriebssträngen von Kraftfahrzeugen, vorzugsweise von allradgetriebenen, Verwendung; entweder zusammen mit einem Differentialgetriebe, wobei die hydraulische Kupplung die Differentialwirkung begrenzt, oder für den Antrieb der zweiten getriebenen Achse, wobei das übertragene Drehmoment von der Differenz zwischen Raddrehzahl und der mit den Rädern der anderen Achse verbundenen Antriebswelle abhängt. Der von der Verdrängungsmaschine erzeugte Druck wirkt auf eine Kupplung, vorzugsweise auf eine Lamellenkupplung. Diese Wirkung ist durch verschiedene, sei es automatisch wirkende, sei es von einer externen Steuerung betätigte Ventile, beeinflußbar.

Aus der US-PS 5,536,215 ist eine derartige Kraftübertragungseinheit bekannt. Ebenso aus dem AT GM 2964. Bei diesen und allen derartigen Kraftübertragungseinheiten befindet sich der Druckraum, in dem der auf den Kolben wirkende Druck aufgebaut wird, im rotierenden Gehäuse. Dadurch unterliegt die darin enthaltene Betriebsflüssigkeit einer Fliehkraft, durch die in der Druckkammer herrschende Druck drehzahlabhängig vergrößert und somit verfälscht wird. Das ist besonders störend, wenn der Druck drehzahldifferenzabhängig ist und von einer hydrostatischen Verdrängungsmaschine geliefert wird, und zwar in beiden möglichen Fällen: Sind im ersten Fall einer ungeregelten Kupplung keine Steuerventile vorhanden, so ist eine Kompensation unmöglich. Sind, im zweiten Fall, Steuerventile vorgesehen, die zum Auskuppeln den Druckraum drucklos machen sollen, so ist das bei höheren absoluten Drehzahlen nicht möglich, weil die an das Steuerventil anschließende Abfuhrleitung auf einem kleineren Radius enden muß. Dort ist fliehkraftbedingt der Druck aber immer kleiner als in der Druckkammer.

Es ist daher Ziel der Erfindung, den Besonderheiten von gattungsgemäßen Kupplungen entsprechend diese Nachteile zu beheben. Der Fliehkrafteinfluss soll in einem erforderlichen Ausmaß zumindest teilweise kompensiert werden.

Dazu ist erfindungsgemäß im Gehäuse mindestens ein Fliehkraftelement vorgesehen, das auf den Kolben eine dem Quadrat der Drehzahl entsprechende und dem auf den Kolben wirkenden Druck entgegengerichtete Kraft ausübt. Dadurch, dass es sich ebenfalls im Gehäuse befindet, ist ohne regelungstechnischen Aufwand bei geeigneter Auslegung die Kompensation in allen Drehzahlbereichen in einem bestimmbaren Ausmaß möglich. Damit kann eine den fahrdynamischen Anforderungen entsprechende Geschwindigkeitsabhängigkeit des übertragenen Momentes eingestellt werden. Das Ausmaß der Kompensation reicht von teilweiser Kompensation über volle Kompensation bis zu Überkompensation. Dabei wird das übetragene Drehmoment mit steigender Geschwindigkeit kleiner, womit bei langsamer Fahrt bessere Traktion, und bei schneller Fahrt bessere Zusammenarbeit mit elektronischen Bremssystemen (z.B. ABS) erreicht wird.

In einer vorteilhaften Konzeption ist das mindestens eine Fliehkraftelement ein Fliehgewicht (Anspruch 1). Der Fliehkraftausgleich erfolgt somit rein mechanisch, wobei in einer bevorzugten Ausführungform das Fliehkraftelement Teil eines zweiarmigen Hebels ist, dessen ein Schenkel das Fliehgewicht und dessen anderer Hebel ein Druckfinger ist (Anspruch 3). Die, beispielsweise drei, Hebel sind sehr einfach und mit nur geringen konstruktiven Veränderungen im Gehäuse unterzubringen. Das ist die einfachste und sogar bei bestehenden Kupplungen nachrüstbare Lösung.

Die andere Konzeption besteht darin dass das Fliehkraftelement ein Betriebsflüssigkeit enthaltender und mit dem Gehäuse rotierender Ringraum ist (Anspruch 4). Hier wird zum Fliehkraftausgleich der hydraulische Weg beschritten. Da in der und um die Kupplung genug Betriebsflüssigkeit vorhanden ist, ist deren Zufuhr kein Problem.

In einer ersten vorteilhaften Ausführungform dieser anderen Konzeption ist der rotierende Ringraum von einer das Gehäuse umgebenden zylindrischen Hülle mit einer kreisringförmigen achsnormalen Wand und von einer achsnormalen Wand des Gehäuses gebildet, und ist die Hülle mit dem Kolben verbunden und in achsialer Richtung verschiebbar (Anspruch 5).

Auf diese Weise ist der Ringraum auf einer Seite von einer verschiebbaren Wand und auf der anderen Seite von einer nicht verschiebbaren Wand des Gehäuses begrenzt. Der Flüssigkeitsspiegel im Ringraum wird durch den inneren Radius der kreisringförmigen achsnormalen Wand bestimmt. Durch die auf das im Ringraum befindliche Arbeitsmedium wirkende Fliehkraft werden die achsnormalen Wände auseinandergedrückt. Diese Kompensationskraft wird von der verschiebbaren Hülle auf den Kolben übertragen.

In einer zweiten vorteilhaften Ausführungform dieser anderen Konzeption steht die radial äusserste Zone des rotierenden Ringraumes über einen Kanal mit einem Kompensations-Druckraum auf der dem Druckraum abgewandten Seite des Kolbens in Verbindung (Anspruch 6). Der Ringraum und der Kanal kann dabei auch im Inneren des Gehäuses vorgesehen sein. Durch dem Kanal zugeordnete Ventile können sogar besondere fahrdynamische Effekte erzielt werden.

Eine besonders elegante Lösung besteht darin, dass der Kompensations-Druckraum von einem Ringzylinder im Gehäuse und von einem Ringfortsatz an der dem Druckraum abgewandten Seite des Kolbens gebildet ist (Anspruch 7).

lm Folgenden wird die Erfindung anhand von Abbildungen beschrieben und erläutert. Es stellen dar:
- Fig.1:: Einen Längsschnitt durch eine erfindungsgemäße Vorrichtung in einer ersten Ausführungsform,
- Fig.2:: einen Längsschnitt durch eine erfindungsgemäße Vorrichtung in einer zweiten Ausführungsform,
- Fig.3:: einen Längsschnitt durch eine erfindungsgemäße Vorrichtung in einer dritten Ausführungsform.

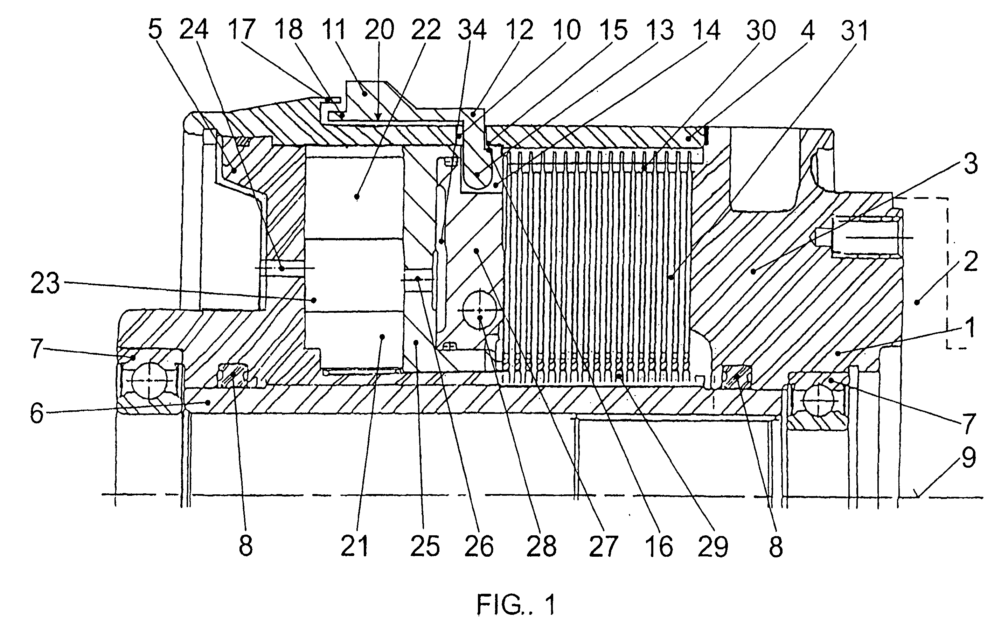

In Fig. 1 ist das Eingangsglied mit 1 bezeichnet, es könnte auch das Ausgangsglied sein, an das mittels nur angedeuteter Schrauben eine strichliert gezeichnete Welle 2 angeflanscht ist. Es besteht aus einer Stirnplatte 3, einem im wesentlichen zylindrischen Gehäuse 4 das mit der Stirnplatte 3 einstückig oder fest verbunden ist und aus einer Endplatte 5 die zu Montagezwecken lösbar, aber dicht mit dem Gehäuse 4 verbunden ist. Das Ausgangsglied 6 (es könnte auch das Eingangsglied sein) ist eine Hohlwelle, in die mittels Keilverzahnung eine nur angedeutete Welle eingeführt ist, es ist in Lagern 7 in der Stirnplatte 3 beziehungsweise der Endplatte 5 des Eingangsgliedes 1 gelagert und kann gegenüber diesem mittels Dichtungen 8 abgedichtet sein. Einfache Dichtringe genügen, weil die Drehzahldifferenz im Durchschnitt sehr klein ist. Mit 9 ist die Drehachse beziehungsweise Mittellinie bezeichnet.

Im Inneren des Gehäuses 4 befindet sich eine hydrostatische Verdrängungsmaschine, 20 die aus einem Innenteil 21 und einem Außenteil 22 besteht. Ersterer ist drehfest mit dem Ausgangsglied 6, zweiterer mit dem Eingangsglied 1 und zwar mit dem Gehäuse 4 verbunden. Die entsprechenden Kuppelzähne sind nur angedeutet. Zwischen Innenteil 21 und Außenteil 22 erstreckt sich ein Arbeitsraum 23, der über einen Saugkanal 24 in nicht gezeigter Weise versorgt wird. Auf der anderen Seite schließt an die hydrostatische Verdrängungsmaschine 20 ein Einsatz 25 an, der einen Druckkanal 26 und einen Kolben 27 enthält, der von dem durch den Druckkanal 26 herangeführten Druckfluid beaufschlagt wird und mit dem Einsatz 25 einen Druckraum 34 begrenzt. Ein Teil dieses Druckfluides kann durch einen Kolben 27 über ein Drosselventil 28 in den eine Kupplung 31 enthaltenden Raum geleitet sein, in dem eine Anzahl von Innenlamellen 29 und Außenlamellen 30 angeordnet sind. Erstere sind mit dem Ausgangsglied 6, zweitere mit dem Gehäuse 4 des Eingangsgliedes 1 drehfest, aber verschiebbar verbunden.

Zur Anbringung einer Vorrichtung zum Ausgleich der durch die Fliehkraft in der Druckkammer 34 auf den Kolben 27 ausgeübten Kraft weist das Gehäuse 4 hier mehrere am Umfang verteilte Durchbrüche 10 auf, durch die zweiarmige abgewinkelte Hebel 12 greifen. Ein Schenkel eines solchen Hebels ist als Fliehgewicht 11 ausgebildet, der andere als Druckfinger 13, der in einer Ausnehmung 14 an der der Druckraum 34 abgewandten Seite des Kolbens 27 angreift. Anstelle einer den zweiarmigen Hebel 12 durchsetzenden Schwenkachse ist hier am Durchbruch 10 des Gehäuses 4 eine Lagerkante 15 vorgesehen, an der sich eine Lagerschulter 16 an der Rückseite des Druckfingers 13 abstützt. Dadurch ist sichergestellt, dass der Hebel 12 nicht davonfliegt. Am äußersten Ende des Fliehgewichtes 11 kann eine Nase 18 vorgesehen sein, die bei Erreichen der äußersten zulässigen Stellung des Fliehgewichtes 11 von einem Endanschlag 17 gehalten wird.

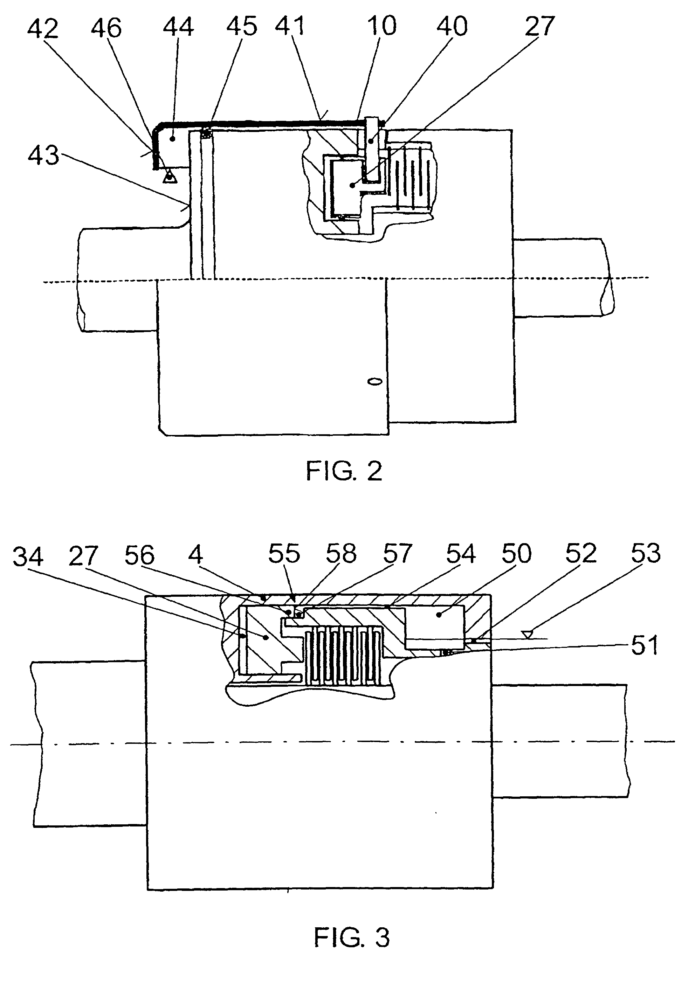

Die Fig.2 zeigt eine andere Konzeption. Auch da besitzt das Gehäuse 4 mehrere am Umfang verteilte Durchbrüche 10, durch die im Kolben 27 steckende radiale Stifte 40 nach außen reichen und mit einer das Gehäuse 4 rundum umgebenden zylindrischen Hülle 41 verbunden sind. Sie können zwischen der Hülle 41 und dem Kolben 27 eine Kraft in Achsrichtung übertragen. Die zylindrische Hülle 41 erstreckt sich in der Abbildung nach links, überragt das Gehäuse 4, und endet in einer kreisringförmigen achsnormalen Wand 42. Zwischen dieser und einer achsnormalen Wand 43 des Gehäuses 4 entsteht so ein Ringraum 44. Dieser ist mittels eines Dichtringes 45 zwischen Gehäuse 4 und Hülle 41 abgedichtet und enthält Arbeitsflüssigkeit in einer Höhe, die durch den Innendurchmesser der Wand 42 bestimmt ist.

Bei Rotation des Gehäuses 4 ist dieser Flüssigkeitsspiegel 46 eine Zylinderfläche. In diesem Ringraum 44 entsteht bei Rotation durch die Fliehkraft ein Druck, der die Wand 43 der Hülle 41 im dargestellten Ausführungsbeispiel nach links zieht und so über die Stifte 40 wieder eine die Fliehkraft im Druckraum 34 kompensierende Kraft auf den Kolben 27 ausübt. Der Ringraum 44 kann auch in Ausbildung und Lage abgeändert werden. Wesentlich ist, dass eine achsiale Kraft entsteht, die der im Druckraum 34 auf den Kolben 27 wirkenden Kraft entgegengerichtet ist.

Gemäß der Variante der Fig.3 kann die Verbindung zwischen Ringraum und Kolben auch auf hydraulischem Weg hergestellt sein. Dazu ist wieder ein Ringraum 50 vorgesehen, in dem gezeigten Ausführungsbeispiel auf der dem Druckraum 34 abgewandten Seite des Kolbens 27, und im Inneren des Gehäuses 4. Gefüllt gehalten wird der Ringraum 50 über eine Zuführbohrung 51 aus dem Inneren des Kupplungsraumes, eine Abflußbohrung 52 sorgt für die Einhaltung eines konstanten (zylindrischen) Flüssigkeitsspiegels 53. Der durch die Fliehkraft im Ringraum 50 erzeugte Druck wirkt über einen achsialen Kanal 54 (oder deren mehrere) auf einen Ringzylinder 55. Dieser ist ebenfalls im Gehäuse 4 ausgebildet und nimmt einen Ringfortsatz 56 des Kolbens 27 dichtend. Er bildet mit dem Ringzylinder 55 einen Kompensationsdruckraum 57. Dort wirkt der Druck auf die kreisringförmige Fläche 58 und kompensiert so die Wirkung des in der Druckkammer 34 herrschenden Druckes.

Im Rahmen der Erfindung kann in vielen Details von den dargestellten Ausführungsbeispielen abgewichen werden. So kann die hydrostatische Verdrängungsmaschine sehr verschieden ausgebildet sein, sowohl hinsichtlich der Form ihrer Rotoren als auch ihrer Anordnung im Gehäuse 4. Schließlich kann die Kraftübertragungseinheit an verschiedenen Stellen des Antriebsstranges angeordnet sein, insbesondere im Kraftfluß vor oder nach dem Achsdifferential. Sie kann auch im Inneren eines das Achsdifferential enthaltenden Gehäuses angeordnet sein.

## Patentansprüche

1. Kraftübertragungseinheit mit einem Eingangsglied und einem Ausgangsglied und einer drehzahldifferenzabhängigen hydraulischen Kupplung, bei der eine hydrostatische Verdrängungsmaschine (20) bei Auftreten einer Differenzdrehzahl zwischen Eingangsglied (1;6) und Ausgangsglied (6;1) in einem Druckraum (34) einen Druck erzeugt, der auf einen eine Reibungskupplung (31 ) beaufschlagenden Kolben (27) wirkt, wobei die Reibungskupplung erste mit dem Eingangsglied und zweite mit dem Ausgangsglied antriebsverbundene Scheiben aufweist und eines der Glieder (1;6) ein die Verdrängungsmaschine enthaltendes Gehäuse (4) bildet, **dadurch gekennzeichnet, dass** im Gehäuse mindestens ein Fliehkraftelement (11,12,13; 41,44; 50,55) vorgesehen ist, das auf den Kolben (27) eine dem durch die Fliehkraft in der Druckkammer (34) erzeugten Druck entgegengerichtete Kraft ausübt.

2. Kraftübertragungseinheit nach Anspruch 1, **dadurch gekennzeichnet, dass** das mindestens eine Fliehkraftelement ein Fliehgewicht (11) ist.

3. Kraftübertragungseinheit nach Anspruch 2, **dadurch gekennzeichnet, dass** das Fliehkraftelement ein zweiarmiger Hebel (12) ist, dessen ein Schenkel das Fliehgewicht (11) und dessen anderer Hebel einen Druckfinger (13) bildet.

4. Kraftübertragungseinheit nach Anspruch 1, **dadurch gekennzeichnet, dass** das Fliehkraftelement ein Betriebsflüssigkeit enthaltender und mit dem Gehäuse (4) rotierender Ringraum (44;50) ist.

5. Kraftübertragungseinheit nach Anspruch 4, **dadurch gekennzeichnet, dass** der rotierende Ringraum (44) von einer das Gehäuse (4) umgebenden zylindrischen Hülle (41) mit einer kreisringförmigen achsnormalen Wand (42) und von einer achsnormalen Wand (43) des Gehäuses (4) gebildet ist, und dass die Hülle (41) mit dem Kolben (27) verbunden und in achsialer Richtung verschiebbar ist.

6. Kraftübertragungseinheit nach Anspruch 4, **dadurch gekennzeichnet, dass** die radial äusserste Zone des rotierenden Ringraumes (50) über einen Kanal (54) mit einem Kompensations-Druckraum (57) auf der dem Druckraum (34) abgewandten Seite des Kolbens (27) in Verbindung steht.

7. Kraftübertragungseinheit nach Anspruch 6, **dadurch gekennzeichnet, dass** der Kompensations-Druckraum (57) von einem Ringzylinder 55 im Gehäuse 4 und von einem Ringfortsatz 56 an der dem Druckraum (34) abgewandten Seite des Kolbens 27 gebildet ist.

## Claims

1. A power transmission unit with an input member and an output member and a hydraulic coupling dependent on a rotational-speed difference, in which, when a rotational-speed difference occurs between the input member (1; 6) and the output member (6; 1), a hydrostatic displacement machine (20) produces in a pressure space (34) a pressure that acts on a piston (27) acting on a friction clutch (31), the friction clutch having first and second disks connected in terms of drive to the input member and the output member respectively, and one of the members (1; 6) forming a housing (4) that contains the displacement machine, **characterized in that** at least one centrifugal-force element (11, 12, 13; 41, 44; 50, 55) is provided in the housing, exerting on the piston (27) a force counter to the pressure produced by the centrifugal force in the pressure chamber (34).

2. The power transmission unit as claimed in claim 1, **characterized in that** the at least one centrifugal-force element is a flyweight (11).

3. The power transmission unit as claimed in claim 2, **characterized in that** the centrifugal-force element is a two-armed lever (12), one leg of which forms the flyweight (11) and the other lever of which forms a pressure finger (13).

4. The power transmission unit as claimed in claim 1, **characterized in that** the centrifugal-force element is an annular space (44; 50) that contains an operating fluid and rotates with the housing (4).

5. The power transmission unit as claimed in claim 4, **characterized in that** the rotating annular space (44) is formed by a cylindrical sleeve (41) surrounding the housing (4) and having a wall (42) in the form of a circular ring normal to the axis and by a wall (43), normal to the axis, of the housing (4), and wherein the sleeve (41) is connected to the piston (27) and can be displaced in an axial direction.

6. The power transmission unit as claimed in claim 4, **characterized in that** the radially outermost zone of the rotating annular space (50) is connected via a passage (54) to a compensation pressure space (57) on the opposite side of the piston (27) from the pressure space (34).

7. The power transmission unit as claimed in claim 6, **characterized in that** the compensation pressure space (57) is formed by an annular cylinder (55) in the housing (4) and by an annular continuation (56) on the opposite side of the piston (27) from the pressure space (34).

## Revendications

1. Unité de transmission de force comportant un élément d'entrée et un élément de sortie, ainsi qu'un couplage hydraulique fonction de la différence de nombres de tours, dans lequel, lors de la survenance d'une différence de nombres de tours entre l'élément d'entrée (1 ; 6) et l'élément de sortie (6 ; 1), une machine de déplacement hydrostatique (20) génère dans une chambre de pression (34) une pression qui agit sur un piston (27) sollicitant un couplage à friction (31), ledit couplage à friction comportant des premiers disques reliés dynamiquement à l'élément d'entrée et des deuxièmes disques reliés dynamiquement à l'élément de sortie, et l'un des éléments (1 ; 6) formant un boîtier (4) contenant la machine de déplacement, **caractérisée en ce qu'**il est prévu dans le boîtier au moins un élément centrifuge (11, 12, 13 ; 41, 44 ; 50, 55) qui exerce sur le piston (27) une force s'opposant à la pression générée par la force centrifuge dans la chambre de pression (34).

2. Unité de transmission de force selon la revendication 1, **caractérisée en ce que** ledit au moins un élément centrifuge est une masselotte (11).

3. Unité de transmission de force selon la revendication 2, **caractérisée en ce que** l'élément centrifuge est un levier à deux branches (12), dont une branche forme la masselotte (11) et dont l'autre branche forme un doigt de pression (13).

4. Unité de transmission de force selon la revendication 1, **caractérisée en ce que** l'élément centrifuge est un espace annulaire (44 ; 50) contenant un liquide et tournant conjointement avec le boîtier (4).

5. Unité de transmission de force selon la revendication 4, **caractérisée en ce que** l'espace annulaire rotatif (44) est formé par une manchon cylindrique (41) entourant le boîtier (4) et comportant une paroi annulaire (42) perpendiculaire à l'axe, et par une paroi (43), perpendiculaire à l'axe, du boîtier (4), et **en ce que** le manchon (41) est relié au piston (27) et est apte à se déplacer dans une direction axiale.

6. Unité de transmission de force selon la revendication 4, **caractérisée en ce que** la zone radialement la plus extérieure de l'espace annulaire rotatif (50) est en liaison via un canal (54) avec un chambre de pression de compensation (57) du côté du piston (27) qui est opposé à la chambre de pression (34).

7. Unité de transmission de force selon la revendication 6, **caractérisée en ce que** la chambre de pression de compensation (57) est formée par un cylindre annulaire (55) disposé dans le boîtier (4), et par une saillie annulaire (56) prévue sur le piston (27) du côté de celui-ci qui est opposé à la chambre de pression (34).
